# EUROPÄISCHE PATENTSCHRIFT

(11) **EP 2 067 643 B1**
(45) Veröffentlichungstag und Bekanntmachung des Hinweises auf die Patenterteilung: **15.05.2013**
(21) Anmeldenummer: 08021167.5
(22) Anmeldetag: 05.12.2008
(51) Int. Cl.: B60J 7/12

(54) **Verdeck eines Cabriolet-Fahrzeugs**
Soft top for a convertible
Capote d'un véhicule cabriolet

(30) Priorität: 07.12.2007 DE 102007059077
(43) Veröffentlichungstag der Anmeldung: 10.06.2009
(73) Patentinhaber: Valmet Automotive Oy, 23500 Uusikaupunki (FI)
(72) Erfinder: Brockhoff, Franz-Ulrich, 49565 Bramsche (DE)
(74) Vertreter: Kronthaler, Schmidt & Coll.

(56) Entgegenhaltungen:
- EP-A- 0 509 326
- DE-U1- 20 002 780

## Beschreibung

Die Erfindung betrifft ein Verdeck, insbesondere Soft-Top-Verdeck, eines Cabriolet-Fahrzeugs mit einem Verdeckbezug, welcher in einem heckseitigen Randbereich an einem Spannbügel eines Verdeckgestänges festlegbar ist, wobei an dem Spannbügel zudem wenigstens ein weiteres Funktionselement anordenbar ist, nach der im Oberbegriff des Patentanspruches 1 näher definierten Art.

Aus der DE 44 41 669 Cl ist ein Faltverdeck für Fahrzeuge mit einem Verdeckgestell und einem Verdeckbezug bekannt. Der Verdeckbezug ist dabei an einem heckseitigen Spannbügel des Verdeckgestells befestigt. Zudem ist an dem Spannbügel ein Dichtkörper angebracht, der mit einem angrenzenden Karosserieteil in Wirkverbindung steht. Der Spannbügel ist zumindest abschnittsweise durch ein gebogenes Strangpreßprofil aus einer Leichtmetalllegierung gebildet.

Nachteilhafterweise gestaltet sich die Herstellung eines derartigen Spannbügels, welcher zur Aufnahme des Dichtkörpers, des Verdeckbezugs und eines Innenhimmels ausgelegt ist, sehr aufwändig und ist folglich mit hohen Kosten verbunden.

Aus der EP 0 509 326 A1 ist ein Klapp- bzw. Faltverdeck für Cabriolets bekannt, bei dem an einem profilierten Spannbügel eine Kunststoffformleiste befestigt ist. Mit der Kunststoffformleiste ist ein Verdeckbezug und ein Dichtungsprofil verbunden.

Es ist Aufgabe der vorliegenden Erfindung, ein Verdeck eines Cabriolet-Fahrzeugs mit einem Verdeckbezug der eingangs genannten Art zu schaffen, welches mit einem einfach und kostengünstig herzustellenden Spannbügel ausgebildet ist, an welchen ein Verdeckbezug und Funktionsbauteile auf einfache Weise angebunden werden können.

Diese Aufgabe wird bei einem Verdeck der eingangs genannten Art gemäß den Merkmalen des kennzeichnenden Teils des Patentanspruches 1 gelöst.

Es wird somit ein Verdeck, insbesondere Soft-Top-Verdeck, eines Cabriolet-Fahrzeugs mit einem Verdeckbezug vorgeschlagen, welcher in einem heckseitigen Randbereich an einem Spannbügel eines Verdeckgestänges festlegbar ist, wobei an dem Spannbügel zudem wenigstens ein weiteres Funktionselement anordenbar ist, und wobei der Spannbügel wenigstens ein Blechelement und wenigstens ein an dem Blechelement anordenbares Halteelement aufweist, wobei das Halteelement zum Zusammenwirken mit dem Funktionselement und dem Verdeckbezug vorgesehen ist. Dabei ist erfindungsgemäß vorgesehen, dass der an einer Leiste, insbesondere einer Kunststoffleiste, angeordnete Verdeckbezug über die Leiste an dem Halteelement anordenbar ist, wobei die Leiste mittels einer Klammerverbindung an dem Halteelement anordenbar ist.

Ein erfindungsgemäßes Verdeck hat den Vorteil, dass aufgrund der zumindest zweiteiligen Ausbildung des Spannbügels die Bauteile des Spannbügels derart ausgebildet werden können, dass sie einerseits einfach und kostengünstig herstellbar sind und sie andererseits hinsichtlich der benötigten Funktionalität, z. B. die Anbindung der Funktionsbauteile, ausgelegt werden können. Somit ist ein derartiger Spannbügel z. B. durch die Verwendung unterschiedlicher Materialien und eine entsprechende Formgebung für das Blechelement und das Halteelement einfach an verschiedene Anforderungen anpassbar und kann für einen neuen Anwendungsfall leicht an die dabei geforderten Rahmenbedingungen angepasst werden.

Der Verdeckbezug kann beispielsweise an der Leiste angenäht oder angeklebt sein.

Besonders vorteilhaft ist dabei die Ausgestaltung des Halteelements als Kunststoffelement, welches kostengünstig und von geringem Gewicht ist, so dass sich für den Spannbügel insgesamt eine Art Hybridbauweise mit einem Blechelement-Basiskörper und einem Kunststoff-Halteelement ergibt.

In einer einfachen Ausbildung eines erfindungsgemäßen Verdecks ist es vorgesehen, dass das Halteelement mittels eines Befestigungselements an dem Blechelement anordenbar ist. Dabei kann es bei einem Einsatz von mehreren Halteelementen vorgesehen sein, dass diese mit einem oder mehreren Befestigungselementen an dem Blechelement anordenbar sind.

Zur Festlegung des Befestigungselements an dem Blechelement ist in einer sehr einfachen Ausbildung der Erfindung vorgesehen, dass das Befestigungselement insbesondere clipartig an dem Blechelement anordenbar ist. Dabei sind auch sämtliche andere Befestigungsarten zur Anordnung des Befestigungselements an dem Blechelement möglich.

Gemäß einer Weiterbildung der Erfindung kann ein als Dichtelement ausgebildetes Funktionselement an dem Halteelement und/oder dem Befestigungselement insbesondere clipartig angeordnet werden. Dabei kann es vorgesehen sein, dass das Dichtelement nur an dem Halteelement oder nur an dem Befestigungselement angeclipst wird. Weiterhin kann es vorgesehen sein, dass das Halteelement und das Befestigungselement in ihrem aneinander angeordneten Zustand derart ausgebildet sind, dass das Dichtelement zwischen dem Halteelement und dem Befestigungselement anclipsbar ist. Neben einer besonders einfach herstellbaren clipartigen Verbindung können zur Anordnung des Dichtelements selbstverständlich auch alle anderen bekannten Befestigungsarten Anwendung finden.

In einer vorteilhaften Ausbildung der Erfindung ist es vorgesehen, dass das Funktionselement als Innenhimmel ausgebildet ist und an dem Halteelement anordenbar ist, wobei der Innenhimmel wie bereits bei dem Dichtelement beschrieben an dem Halteelement und/oder dem Befestigungselement insbesondere clipsartig anordenbar ist.

Das Blechelement kann in einer vorteilhaften Ausbildung eines erfindungsgemäßen Verdecks gebogen ausgebildet sein, so dass insbesondere eine optimale Anbindung an das wenigstens eine Halteelement umsetzbar ist.

Weitere Vorteile und vorteilhafte Ausführungen eines Verdecks, insbesondere eines Soft-Top-Verdecks, eines Cabriolet-Fahrzeugs nach der Erfindung ergeben sich aus den Patentansprüchen, der Zeichnung und der Beschreibung.

Nachfolgend ist ein vorteilhaftes Ausführungsbeispiel eines Verdecks eines Cabriolet-Fahrzeugs anhand der Zeichnung prinzipmäßig beschrieben.

### Es zeigt:

- Fig. 1: eine stark vereinfachte dreidimensionale Darstellung eines Cabriolet-Fahrzeugs mit einem als Soft-Top-Verdeck ausgebildeten verdeck; und
- Fig. 2: eine Schnittdarstellung in einer zu einer Fahrzeugmittelachse parallelen Ebene durch einen fahrzeugheckseitigen Randbereich des Verdecks der Fig. 1 mit einem Stoffbügel.

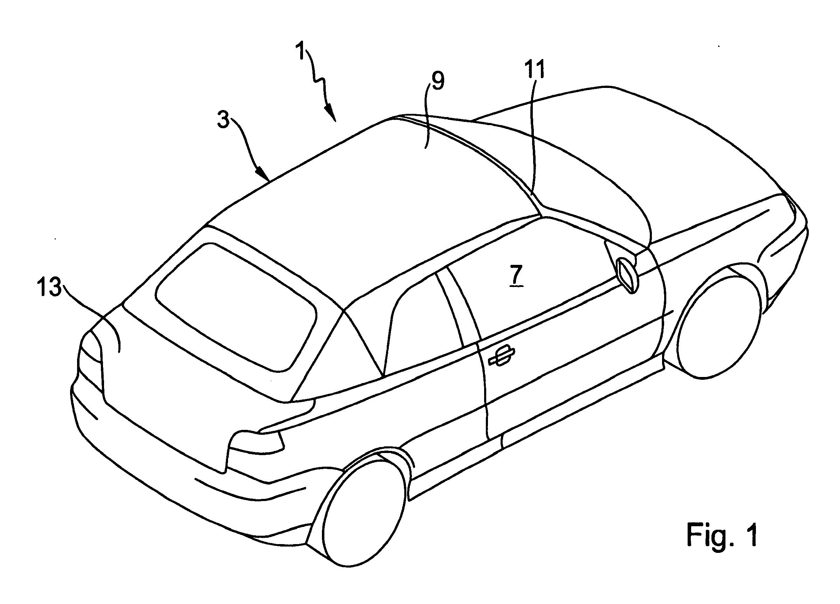

In Fig. 1 ist ein Cabriolet-Fahrzeug 1 mit einem in geschlossener Position dargestellten, als Soft-Top-Verdeck ausgebildeten Verdeck 3 gezeigt.

Das Verdeck 3 kann mit einem in der Fig. 1 nicht näher dargestellten Verdeckgestänge 5 zwischen der einen Fahrgastraum 7 überdeckenden geschlossenen Position und einer den Fahrgastraum 7 freigebenden offenen Position,verfahren werden.

In der dargestellten geschlossenen Position reicht das mit einem textilen verdeckbezug 9 ausgebildete Verdeck 3 von seiner fahrzeugfrontseitigen Anordnung an einem windschutzscheibenrahmen 11 bis zu seiner fahrzeugheckseitigen Anordnung an einem verdeckkastendeckel 13, wobei das verdeck 3 in seinem fahrzeugheckseitigen Bereich auch an einem einen so genannten Kofferraum bedeckenden Heckdeckel bzw. einem sowohl als Verdeckkastendeckel als auch als Heckdeckel fungierendem Deckel angeordnet sein kann.

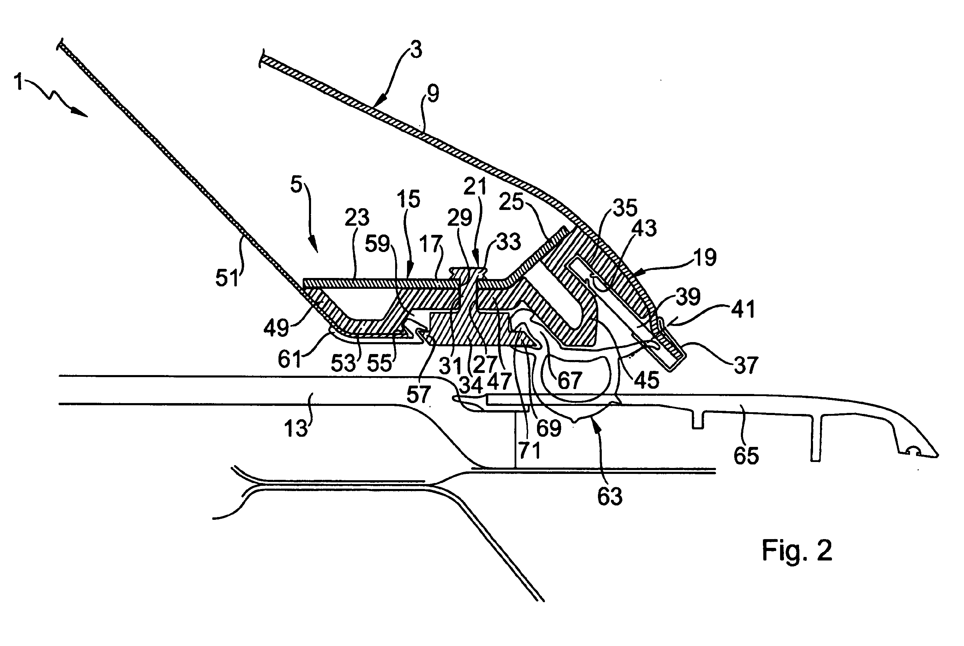

Die Fig. 2 zeigt eine Schnittdarstellung durch einen fahrzeugheckseitigen Randbereich des Verdecks 3. Hierbei ist ein sich in Fahrzeugquerrichtung erstreckender Spannbügel 15 ersichtlich, welcher Bestandteil des Verdeckgestänges 5 ist, und welcher in dem dargestellten geschlossenen Zustand des Verdecks 3 an einer mit dem Verdeckkastendeckel 13 zusammenwirkenden so genannten Scheuerleiste 65 anliegt und gegenüber dieser abgedichtet ist.

Der Spannbügel 15 ist vorliegend mit einem Blechelement 17 und einem Halteelement 19 ausgebildet, wobei das Halteelement 19 durch ein Befestigungselement 21 an dem Blechelement 17 angeordnet ist.

Das Blechelement 17 ist als Stahlblech mit einem im Wesentlichen horizontal verlaufenden fahrzeugfrontseitigen ersten Teil 23 und einem mittels einer einfachen Biegung fahrzeugheckseitig an den ersten Teil 23 anschließenden, in Fahrzeughochrichtung gebogenen zweiten Teil 25 ausgebildet und dient der Erreichung einer gewünschten Stabilität des Spannbügels 15.

Im Wesentlichen unterhalb des Blechelements 17 ist das Halteelement 19 an dem Blechelement 17 angeordnet, wobei das Halteelement 19 hierzu eine Ausnehmung 27 und das Blechelement 17 im Bereich seines ersten Teils 23 eine Bohrung 29 aufweist, durch welche ein stiftartiger Teil 31 des mit Kunststoff ausgebildeten Befestigungselements 21 geführt ist.

Der stiftartige Teil 31 des Befestigungselement 21 weist in seinem in montiertem Zustand nach oben weisenden Ende einen erweiterten, teller- bzw. plattenförmigen Teil 33 auf, welcher im Zusammenspiel mit einem gegenüber dem stiftartigen Teil 34 im Querschnitt ebenfalls erweiterten, am entgegengesetzten Ende des stiftartigen Teils 34 angeordneten Körper 34 des Befestigungselements 21 in montiertem Zustand das Halteelement 19 stöpselartig an dem Blechelement 17 festlegt.

Das Halteelement 19 ist mit einem Kunststoff ausgebildet und derart geformt, dass das Halteelement 19 mit seiner in montiertem Zustand nach oben weisenden Kontur mit der in montiertem Zustand des Blechelements 17 nach unten weisenden Kontur im Wesentlichen übereinstimmt.

Das Halteelement 19 weist in seinem fahrzeugheckseitigen Bereich ein schlitzartiges Element 35 auf, welches zur Anordnung des Verdeckbezugs 9 an dem Halteelement 19 vorgesehen ist. Hierzu ist der Verdeckbezug 9 in seinem fahrzeugheckseitigen Bereich mittels eines Klammerbandes 37 bzw. eines Einfassbandes bündig an einer als Kunststoffleiste 39 ausgebildeten Leiste angeordnet, wobei das Klammerband 37 mittels einer Nähverbindung 41 den Verdeckbezug 9 mit der Kunststoffleiste 37 verbindet und eine äußere Kante des Verdeckbezugs 9 bildet.

Das dem heckseitigen Ende des Verdeckbezugs 9 abweisende Ende der Kunststoffleiste 39 ist zur Anordnung des Verdeckbezugs 9 an dem Halteelement 19 in das schlitzartige Element 35 des Halteelements 19 eingesteckt und über ein Klammerverbindung 43 daran festgelegt. Der Verdeckbezug 9 wird somit durch eine in geschlossenem Zustand des Verdecks 3 in Richtung des Pfeils P wirkenden Kraft an dem Spannbügel 15 gehalten.

Das in seinem fahrzeugheckseitigen Bereich mit dem schlitzartigen Element 35 einen S-förmigen Bereich 45 aufweisende Halteelement 19, welches in diesem Bereich 45 mit dem zweiten Teil 25 des Blechelements 17 zusammenwirkt, verläuft fahrzeugfrontseitig an den S-förmigen Bereich 45 anschließend im Wesentlichen parallel zu dem ersten Teil 23 des Blechelements 17. In diesem parallel verlaufenden Bereich 47 ist die Ausnehmung 27 an dem Halteelement 19 angeordnet.

Fahrzeugfrontseitig an den parallel verlaufenden Bereich 47 des Halteelements 19 schließt sich ein von dem Blechelement 17 vorgewölbter Bereich 49 des Halteelements 19 an, welcher an seinem fahrzeugfrontseitigen Ende im Wesentlichen bündig an dem ersten Teil 23 des Blechelements 17 angeordnet ist.

Zur Anordnung eines als Innenhimmel 51 ausgebildeten Funktionselements an dem Spannbügel 15 weist der vorgewölbte Bereich 49 des Halteelements 19 in einem fahrzeugheckseitigen Bereich seines parallel zu dem ersten Teil 23 des Blechelements 17 verlaufenden Teils 53 einen Vorsprung 55 auf, welcher einem ersten Vorsprung 57 des Körpers 34 des Befestigungselements 21 gegenüberliegt.

Der Vorsprung 55 des Halteelements 19 bildet zusammen mit dem ersten Vorsprung 57 des Befestigungselements 21 einen Aufnahmebereich 59 zur Anordnung des Innenhimmels 51 an dem Halteelement 19.

An einem fahrzeugheckseitigen Ende des Innenhimmels 51 ist ein Einsteckelement 61 beispielsweise angenäht oder angeklebt, wobei der Innenhimmel 51 mittels des Einsteckelements 61 in den Aufnahmebereich 59 gesteckt und darin mittels einer hinterschnittigen Verrastung festgelegt werden kann. Die Festlegung des Innenhimmels 51 an dem Halteelement 19 erfolgt dabei auf einfache Weise clipartig.

Zur Abdichtung des Stoffbügels 15 gegenüber dem verdeckkastendeckel 13 ist ein als Dichtelement 63 ausgebildetes Funktionselement vorgesehen, welches einerseits an der mit dem Verdeckkastendeckel 13 zusammenwirkenden und im wesentlichen fahrzeugheckseitig an den Verdeckkastendeckel 13 anschließenden sogenannten Scheuerleiste 65 zusammenwirkt und andererseits mit dem Halteelement 19 des Spannbügels 15 zusammenwirkt.

Zur Festlegung des Dichtelements 63 an dem Spannbügel 15 ist an dem Dichtelement 63 ein pilzförmiger Fortsatz 67 angeordnet, welcher in einem von dem Haltelement 19 und einem zweiten Vorsprung 69 gebildeten Aufnahmeraum 71 hinterschnittig verrastet werden kann. Auch diese Verrastung erfolgt vorliegend clipartig.

## Patentansprüche

1. Verdeck, insbesondere Soft-Top-Verdeck, eines Cabriolet-Fahrzeugs (1) mit einem Verdeckbezug (9), welcher in einem heckseitigen Randbereich an einem Spannbügel (15) eines Verdeckgestänges (5) festgelegt ist, wobei an dem Spannbügel (15) zudem wenigstens ein weiteres Funktions-element (51, 63) angeordnet ist, und wobei der Spannbügel (15) wenigstens ein Blechelement (17) und wenigstens ein an dem Blechelement (17) anordenbares Halteelement (19) aufweist, wobei das Halteelement (19) zum Zusammenwirken mit dem Funktionselement (51, 63) und dem Verdeckbezug (9) vorgesehen ist, wobei
der an einer Leiste (39), insbesondere einer Kunststoffleiste, angeordnete Verdeckbezug (9) über die Leiste (39) an dem Halteelement (19) angeordnet ist, **dadurch gekennzeichnet, dass** die Leiste (39) mittels einer Klammerverbindung (43) an dem Halteelement (19) angeordnet ist.

2. Verdeck nach Anspruch 1,
**dadurch gekennzeichnet,**
**dass** das Halteelement (19) mittels eines Befestigungselements (21) an dem Blechelement (17) anordenbar ist.

3. Verdeck nach Anspruch 2,
**dadurch gekennzeichnet,**
**dass** das Befestigungselement (21) clipartig an dem Blechelement (17) anordenbar ist.

4. Verdeck nach einem der Ansprüche 2 oder 3,
**dadurch gekennzeichnet,**
**dass** das Funktionselement (63) als Dichtelement ausgebildet ist und an dem Halteelement (19) und/oder dem Befestigungselement (21) insbesondere clipartig anordenbar ist.

5. Verdeck nach einem der Ansprüche 1 bis 4,
**dadurch gekennzeichnet,**
**dass** das Funktionselement (51) als Innenhimmel ausgebildet ist und an dem Halteelement (19) und/oder dem Befestigungselement (21) insbesondere clipartig anordenbar ist.

6. Verdeck nach einem der Ansprüche 1 bis 5,
**dadurch gekennzeichnet,**
**dass** das Blechelement (17) gebogen ausgebildet ist.

7. Verdeck nach einem der Ansprüche 1 bis 6,
**dadurch gekennzeichnet,**
**dass** das Halteelement (19) als Kunststoffelement ausgebildet ist.

## Claims

1. A hood, in particular a soft top, for a convertible vehicle (1) with a hood cover (9), which is fixed in a rear edge region to a tension bow (15) of a hood linkage (5), wherein at least one further functional element (51, 63) is additionally arranged on the tension bow (15) and wherein the tension bow (15) comprises at least one sheet-metal element (17) and at least one holding element (19) which can be arranged on the sheet-metal element (17), said holding element (19) being provided to cooperate with the functional element (51, 63) and the hood cover (9), wherein the hood cover (9), which is arranged on a moulding (39), in particular a plastic moulding, is arranged on the holding element (19) via the moulding (39), **characterised in that** the moulding (39) is arranged on the holding element (19) by means of a clamp connection (43).

2. The hood according to claim 1, **characterised in that** the holding element (19) can be arranged on the sheet-metal element (17) by means of a fastening element (21).

3. The hood according to claim 2, **characterised in that** the fastening element (21) can be arranged on the sheet-metal element (17) in a clip-type manner.

4. The hood according to any one of claims 2 or 3, **characterised in that** the functional element (63) is provided as a sealing element and can be arranged on the holding element (19) and/or the fastening element (21), in particular in a clip-type manner.

5. The hood according to any one of claims 1 to 4, **characterised in that** the functional element (51) is provided as an inside roof lining and can be arranged on the holding element (19) and/or the fastening element (21), in particular in a clip-type manner.

6. The hood according to any one of claims 1 to 5, **characterised in that** the sheet-metal element (17) has a curved shape.

7. The hood according to any one of claims 1 to 6, **characterised in that** the holding element (19) is provided as a plastic element.

## Revendications

1. Capote, notamment une capote souple, pour un véhicule cabriolet (1), présentant un recouvrement de capote (9), qui est monté fixe dans une région de bord arrière à un étrier de tension (15) d'une tringlerie de capote (5), au moins un autre élément fonctionnel (51, 63) étant disposé en plus sur l'étrier de tension (15) et l'étrier de tension (15) comprenant au moins un élément en tôle (17) et au moins un élément de retenue (19) que l'on peut disposer sur l'élément en tôle (17), ledit élément de retenue (19) étant destiné à coopérer avec l'élément fonctionnel (51, 63) et le recouvrement de capote (9), le recouvrement de capote (9), disposé sur une moulure (39), notamment une moulure en matière plastique, étant disposé sur l'élément de retenue (19) au moyen de la moulure (39), **caractérisé en ce que** la moulure (39) est disposée sur l'élément de retenue (19) au moyen d'une jonction par serrage (43).

2. Capote selon la revendication 1, **caractérisé en ce que** l'on peut disposer l'élément de retenue (19) sur l'élément en tôle (17) au moyen d'un élément de fixation (21).

3. Capote selon la revendication 2, **caractérisé en ce que** l'on peut disposer l'élément de fixation (21) sur l'élément en tôle (17) à la manière d'un clip.

4. Capote selon l'une quelconque des revendications 2 ou 3, **caractérisé en ce que** l'élément fonctionnel (63) est réalisé en tant qu'élément d'étanchéité et peut être disposé sur l'élément de retenue (19) et/ou l'élément de fixation (21), notamment à la manière d'un clip.

5. Capote selon l'une quelconque des revendications 1 à 4, **caractérisé en ce que** l'élément fonctionnel (51) est réalisé en tant qu'habillage de plafond et peut être disposé sur l'élément de retenue (19) et/ou l'élément de fixation (21), notamment à la manière d'un clip.

6. Capote selon l'une quelconque des revendications 1 à 5, **caractérisé en ce que** l'élément en tôle (17) est courbé.

7. Capote selon l'une quelconque des revendications 1 à 6, **caractérisé en ce que** l'élément de retenue (19) est réalisé sous forme d'un élément en matière plastique.
